# EUROPÄISCHE PATENTSCHRIFT

(11) **EP 0 500 540 B1**
(45) Veröffentlichungstag und Bekanntmachung des Hinweises auf die Patenterteilung: **09.06.1993**
(21) Anmeldenummer: 90913141.9
(22) Anmeldetag: 30.08.1990
(51) Int. Cl.: F01L 1/34

(54) **VORRICHTUNG ZUR RELATIVEN DREHWINKELVERSTELLUNG EINER WELLE ZU EINEM ANTRIEBSRAD, INSBESONDERE NOCKENWELLE EINER BRENNKRAFTMASCHINE**
DEVICE FOR ADJUSTING THE RELATIVE ANGLE OF ROTATION OF A SHAFT TO A DRIVE WHEEL, ESPECIALLY THE CAMSHAFT OF AN INTERNAL COMBUSTION ENGINE
DISPOSITIF DE REGLAGE RELATIF DE L'ANGLE DE ROTATION D'UN ARBRE PAR RAPPORT A UNE ROUE MOTRICE, NOTAMMENT DE L'ARBRE A CAMES D'UN MOTEUR A COMBUSTION INTERNE

(30) Priorität: 06.09.1989 DE 3929621
(43) Veröffentlichungstag der Anmeldung: 02.09.1992
(73) Patentinhaber: Bayerische Motoren Werke Aktiengesellschaft, 80788 München (DE)
(72) Erfinder: THOMA, Josef, D-8000 München 50 (DE)
(74) Vertreter: Bücken, Helmut
(86) Internationale Anmeldenummer: EP9001442
(87) Internationale Veröffentlichungsnummer: WO9103628

(56) Entgegenhaltungen:
- DE-A- 3 616 234
- US-A- 4 231 330
- US-A- 4 561 390

## Beschreibung

Die Erfindung betrifft eine Vorrichtung zur relativen Drehwinkelverstellung einer Welle zu einem Antriebsrad mit den im Oberbegriff des Patentanspruches 1 angegebenen Merkmalen.

Eine derartige Vorrichtung ist z. B. aus der EP-A-0 245 791 bekannt. Hierbei wirkt der Linearmotor mit einer Verstellanordnung zusammen, die im wesentlichen in einer stirnseitigen Ausnehmung der winkelverstellbaren Welle bzw. Nockenwelle untergebracht ist. Dieser die Baulänge der Brennkraftmaschine unwesentlich beeinflussenden Verstellanordnung ist der hydraulische Linearmotor an einem lösbaren Maschinengehäusedeckel mit integrierten Hydraulikleitungen und einer Steuereinrichtung unter Ausnützung des Bauraumes bis zum stirnseitigen Ende der verstellbaren Welle bzw. der Verstellanordnung zugeordnet. Die Aktivierung des hydraulischen Linearmotors erfolgt über ein von der Brennkraftmaschine separates Hydrauliksystem mit einer gesondert angetriebenen Pumpe.

Ferner wurde eine Vorrichtung zur relativen Drehwinkelverstellung einer Welle zu einem Antriebsrad vorgeschlagen (EP-A-0 363 600), bei der ein mit der Verstellanordnung einer ersten, verstellbaren Nockenwelle einer Brennkraftmaschine zusammenwirkender Rotor eines Hydromotors vom Förderstrom einer von einer zweiten Nockenwrelle angetriebenen Hydropumpe beaufschlagt ist. Hierbei bilden Hydropumpe und Hydromotor einschließlich der Hydraulikleitungen eine den vorgenannten Wellen zugeordnete Einheit, die in einem dem Antrieb der Wellen dienenden Gehäusebereich der Brennkraftmaschine integriert ist.

Der Erfindung liegt die Aufgabe zugrunde, eine gattungsgemäße Vorrichtung mit einer hydraulischen Pumpe derart zu kombinieren, daß eine kompakte, platzsparende Einheit zur baulichen Integration in/an der Brennkraftmaschine erzielt ist.

Diese Aufgabe wird mit den kennzeichnenden Merkmalen des Patentanspruches 1 dadurch gelöst, daß eine Hydropumpe mit einem Pumpenrotor zur Längs- bzw. Verstell-Achse des Linearmotors koaxial angeordnet ist.

Die Kombination aus Hydropumpe - auch als hydrostatische Pumpe bekannt - und Linearmotor in gleichachsiger Anordnung ergibt in vorteilhafter Weise eine kompakte, platzsparende Einheit. Diese Einheit kann zugleich als kleinste Bau- bzw. Montage-Einheit dienen. Zur Erzielung einer besonders kompakten, platzsparenden Einheit sind Linearmotor und Hydropumpe zur drehwinkelverstellbaren Welle koaxial an einem lösbar ausgebildeten Maschinengehäusedeckel angeordnet, wobei die erfindungsgemäße Einheit mit dem Maschinengehäusedeckel die nächstgrößere Bau- bzw. Montage-Einheit bildet. Hierbei können Teile der erfindungsgemäßen Einheit aus Hydropumpe und Linearmotor integraler Bestandteil des Maschinengehäusedeckels sein. Jedoch ist auch eine gesonderte Ausbildung der erfindungsgemäßen Einheit und des Maschinengehäusedeckels vorstellbar.

Die erfindungsgemäße Kombination kann nach weiteren Unteransprüchen besonders vorteilhaft realisiert werden durch die Wahl einer Radialkolbenpumpe einerseits und einem als Zylinder/Kolben-Einheit gestalteten Linearmotor andererseits. Die bei genügendem Förderstrom und sehr hohem Förderdruck relativ kleinbauende Radialkolbenpumpe unterstützt damit die kompakte Ausgestaltung der erfindungsgemäßen Einheit, wobei die gewählte Bauart des Linearmotors eine gute bauliche Anpassung an die gewählte Radialkolbenpumpe ermöglicht. In konsequenter Ausnützung dieses Vorteils wird nach einem weiteren Unteranspruch ein besonders bevorzugtes Ausführungsbeispiel dadurch erreicht, daß die Radialkolbenpumpe am Maschinengehäusedeckel wellenseitig angeordnet ist, wobei der Pumpenrotor am Außenumfang des Zylinders des Linearmotors drehbeweglich gelagert ist. Für diese extrem kompakt gestaltete Einheit kann der Antrieb der Radialkolbenpumpe auf elegante Weise mit einfachen Mitteln dadurch gelöst werden, daß eine innenbeaufschlagte Radialkolbenpumpe vorgesehen ist mit einem im Maschinengehäusedeckel ausgebildeten, wellenseitig offenen Pumpengehäuse, das den über eine Steckanordnung in wellenseitiger Antriebsverbindung stehenden Pumpenrotor aufnimmt. Die vorgeschlagene Steckanordnung unterstützt bei zur Montagerichtung paralleler Steckanordnung das Montieren der erfindungsgemäßen Bau- bzw. Montage-Einheit erheblich.

Die erfindungsgemäß kombinierte Einheit mit einem auf dem Zylinder des Linearmotors drehbeweglich gelagerten Pumpenrotor der Hydropumpe bzw. der Radialkolbenpumpe ergibt im Hinblick auf Fertigung und Detailmontage besondere Vorteile dadurch, daß ein gesonderter mit unterschiedlichen Außendurchmessern ausgebildeter Zylinder des Linearmotors in einer Stufenbohrung des Maschinengehäusedeckels angeordnet ist, und der Zylinder wellenseitig mit Flanschbuchsen zur gleitbeweglichen Lagerung des radialverschiebbare Förderkolben aufnehmenden Pumpenrotors ausgerüstet ist, wobei die Flanschbuchsen über am Umfang verteilt angeordnete, saug- und druckseitige Steueröffnungen aufweisen zur Verbindung mit in der Zylinderwand angeordneten Zu- und AblaufKammern.

Die Ausbildung von Funktionseinheiten der Hydropumpe bzw. Radialkolbenpumpe in der Wand des Zylinders des Linearmotors ergibt weitere, einfache Ausgestaltungen dadurch, daß die Zuströmkammer und die Abströmkammer jeweils mit einem in der Zylinderwand angeordneten, im wesentlichen axial gerichteten Kanal verbunden sind, wobei jeder Kanal über eine am Außenumfang des Zylinders des Linearmotors ausgebildete Umfangsnut mit einer im Maschinengehäusedeckel angeordneten Leitung in Verbindung steht. Werden weiter die vorgenannten Kanäle vom wellenseitigen Ende des Zylinders in dessen Zylinderwand angeordnet, so kann zum dichten Verschluß des Saugkanals und des Druckkanals dem Zylinder am wellenseitigen Ende eine Flanschmutter zugeordnet sein, die ferner mit ihrem äußeren Randbereich der Axialsicherung der Flanschbuchse zur drehbeweglichen Lagerung des Pumpenrotors auf dem Zylinder dient.

Für innenbeaufschlagte Radialkolbenpumpen mit im Pumpenrotor radial beweglichen Förderkolben ist es bekannt, diese mit ihren radial äußeren Enden mit einem im Pumpengehäuse angeordneten Gleitring zusammenwirkenzulassen. Für ein im Maschinengehäusedeckel ausgebildetes, wellenseitig offenes Pumpengehäuse kann eine gesonderte Lagefixierung dieses Gleitringes dadurch entfallen, daß in weiterer Ausgestaltung der Erfindung dem wellenseitig offenen Pumpengehäuse mit axialem Spiel ein Geberrad zugeordnet ist. Das Geberrad kann dabei beispielsweise mit der Steckanordnung für den Pumpenrotor in drehfester Verbindung stehen. Weiter kann aber das Geberrad auch mit dem Pumpenrotor einstückig ausgebildet sein, wobei die axiale Zuordnung des Pumpenrotors zum im Maschinengehäusedeckel integrierten Pumpengehäuse über die Steckanordnung bewirkt sein kann.

Weitere Ausgestaltungen der Erfindung beziehen sich auf die Anordnung der Hydraulik-Leitungen im Maschinengehäusedeckel, wobei zur Vermeidung eines gesonderten Hydrauliksystems beispielsweise die Saug-Leitung im Maschinengehäusedeckel mit dem Schmierkreislauf der Brennkraftmaschine in Verbindung steht. Zur stufenlosen Verstellung mit sicherer Halterung des Kolbens in jeder gewünschten Drehwinkellage ist der Kolben des Linearmotors als Differenzkolben ausgestaltet, wobei zur beidseitigen Beaufschlagung dieses Differenzkolbens vorgesehene Druck-Leitungen über ein Taktventil gesteuert sind, wobei vom Taktventil abgesteuerte Hydraulikflüssigkeit über eine maschinenseitig ausmündende Ablaufleitung im Maschinengehäusedeckel dem Schmiermittelkreislauf der Brennkraftmaschine wieder zugeführt wird. Weiter lassen sich die Außenabmessungen einer Hydropumpe durch Kombination mit einem Druck-Speicher in gewünschter Weise reduzieren, wobei der Druck-Speicher vorzugsweise zur Vermeidung gesonderter Leitungen am Maschinengehäusedeckel integriert ist.

Um weiter die Dimensionierung wichtiger Teile der Gesamt-Vorrichtung für einen akzeptablen Montagevorgang nicht ungünstig zu beeinflussen, wird die erfindungsgemäße Bau- bzw. Montage-Einheit dahingehend weitergebildet, daß diese zusätzlich ein über eine Kuppelstange verbundenes, zwischen Welle und Antriebsrad winkelverstellwirksames Koppelglied der Verstellanordnung umfaßt. Damit kann ein wesentlicher Funktionsblock der Gesamt-Vorrichtung von der Brennkraftmaschine gesondert aufgebaut und in die Montagelinie der Brennkraftmaschine eingeführt werden.

Es bleibt im Rahmen der Erfindung, die Hydropumpe auch an der drehwinkelverstellbaren Welle anzuordnen und das Pumpengehäuse über eine Steckanordnung deckelseitig drehfest zu halten. Es ist weiter denkbar, den Linearmotor, die Hydropumpe - ggf. mit Geberrad - und die aus Leitungen und Taktventil gebildete Steuereinrichtung in einem gesonderten Teil anzuordnen und dieses Teil mit dem Maschinengehäusedeckel zu verbinden. Auch diese Ausgestaltung ermöglicht die gesonderte Antertigung eines Funktionsblockes der Gesamt-Vorrichtung. Diese Ausgestaltung kann für eine kostengünstige Nachrüstung in Frage kommen.

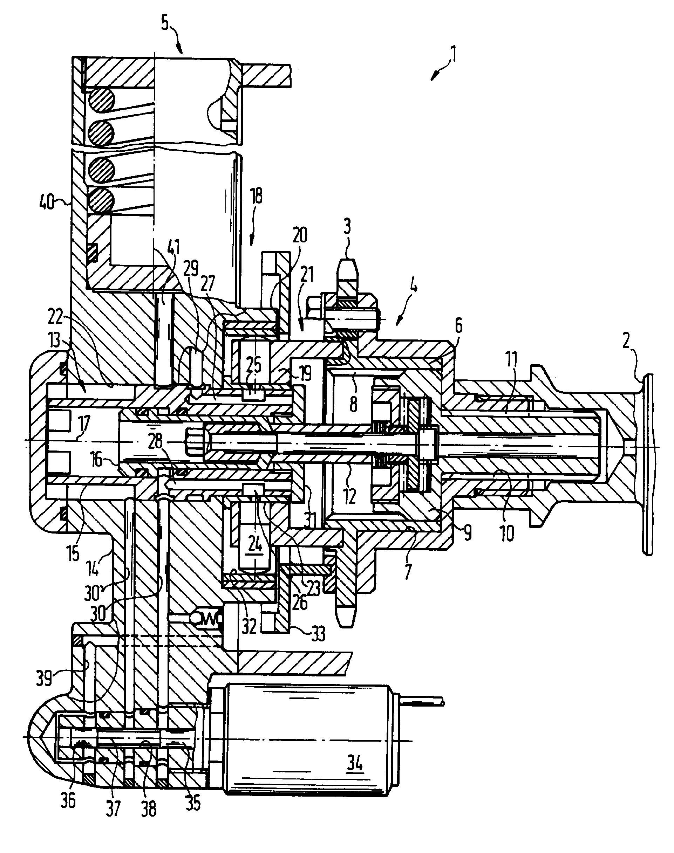

Weitere Einzelheiten sind anhand eines in der Zeichnung dargestellten Ausführungsbeispiels beschrieben.

Eine Vorrichtung 1 zur relativen Drehwinkelverstellung einer Nockenwelle 2 einer nicht näher dargestellten Brennkraftmaschine zu einem Antriebsrad 3 umfaßt eine Verstellanordnung 4 und eine Betätigungsanordnung 5. Das Antriebsrad der Verstellanordnung 4 steht in einstückiger Verbindung mit einer Hohlnabe 6, die über den Außenumfang in einer wellenäußeren Ausnehmung 7 drehwinkelbeweglich gelagert ist. Die Hohlnabe 6 wirkt über eine Schräg- bzw. Schraubverzahnung 8 mit einem Koppelglied 9 zusammen, das in einer welleninneren Ausnehmung 10 über eine Geradführung 11 mit der Nockenwelle 2 in drehfester Verbindung steht. Zur relativen Drehwinkelverstellung der Nockenwelle 2 gegenüber dem Antriebsrad 3 ist das Koppelglied 9 axial verlagerbar, wobei eine Kuppelstange 12 das Koppelglied 9 mit einem hydraulischen Linearmotor 13 der Betätigungsanordnung 5 verbindet.

Der Linearmotor 13 ist in einem lösbar ausgebildeten Maschinengehäusedeckel 14 angeordnet und besteht im wesentlichen aus einem Zylinder 15 und einem darin verlagerbaren Kolben 16. Zur Längs- bzw. Verstell-Achse 17 des Linearmotors 13 ist am Maschinengehäusedeckel 14 wellenseitig eine als Radialkolbenpumpe ausgebildete Hydropumpe 18 mit einem Pumpenrotor 19 koaxial angeordnet, wobei der Pumpenrotor 19 am Außenumfang des Zylinders 15 des Linearmotors 13 drehbeweglich gelagert ist. Wie aus der einzigen Zeichnung näher hervorgeht, ist die Hydropumpe 18 vorzugsweise als innenbeaufschlagte Radialkolbenpumpe vorgesehen mit einem im Maschinengehäusedeckel 14 ausgebildeten, wellenseitig offenen Pumpengehäuse 20, das den über eine Steckanordnung 21 in wellenseitiger Antriebsverbindung stehenden Pumpenrotor 19 aufnimmt. Zur Erzielung einer fertigungstechnisch günstigen, aus Linearmotor 13, Hydropumpe 18 und Maschinengehäusedeckel 14 gebildeten Bau- bzw. Montage-Einheit weist der Maschinengehäusedeckel 14 zur Aufnahme eines gesonderten, mit unterschiedlichen Außendurchmessern ausgebildeten Zylinder 15 des Linearmotors 13 eine Stufenbohrung 22 auf. Der in der Stufenbohrung 22 angeordnete Zylinder 15 ist wellenseitig mit einer Flanschbuchse 23 zur gleitbeweglichen Lagerung des radial verschiebbare Förderkolben 24 aufnehmenden Pumpenrotors 19 ausgerüstet, wobei die Flanschbuchse 23 über am Umfang verteilt angeordnete, saug- und druckseitige Steueröifnungen aufweist zur Verbindung mit in der Zylinderwand angeordneten Zu- und Ablaufkammern 25 bzw. 26. Die Zuströmkammer 25 und die Abströmkammer 26 sind jeweils mit einem in der Zylinderwand angeordneten, im wesentlichen axial gerichteten Kanal 27 bzw. 28 verbunden, wobei jeder Kanal 27, 28 über eine am Außenumfang des Zylinders 15 des Linearmotors 13 ausgebildete Umfangsnut mit einer im Maschinengehäusedeckel 14 angeordneten Leitung 29 bzw. 30 in Verbindung steht. Der Saug-Kanal 27 und der Druckkanal 28 werden am wellenseitigen Ende des Zylinders 15 des Linearmotors 13 durch eine Flanschmutter 31 verschlossen, die mit ihrem äußeren Randbereich der Axialsicherung der Flanschbuchse 23 für den Pumpenrotor 19 auf dem Zylinder 15 dient.

Das zur Längs- bzw. Verstell-Achse 17 des Linearmotors 13 im Maschinengehäusedeckel 14 exzentrisch angeordnete, wellenseitig offene Pumpengehäuse 20 ist mit einem mit den Förderkolben 24 zusammenwirkenden Gleitring 32 ausgerüstet, der axial durch ein mit axialem Spiel in der Steckanordnung 21 angeordnetes Geberrad 33 gesichert ist. Das Geberrad 33 kann ein gesondertes Bauteil sein. Es kann auch mit dem Pumpenrotor 19 einstückig ausgebildet sein. Vorzugsweise wirkt jedes Geberrad 33 mit einem im Maschinengehäusedeckel 14 angeordneten - nicht dargestellten - Geber zusammen.

Um für die hydraulische Betätigungsanordnung 5 einen gesonderten Hydraulikkreislauf zu vermeiden, steht die Saug-Leitung 29 im Maschinengehäusedeckel 14 mit dem Schmierkreislauf der nicht näher dargestellten Brennkraftmaschine in Verbindung. Weiter sind zwei im Maschinengehäusedeckel 14 vorgesehene Druck-Leitungen 30 und 30' zur beidseitigen Beaufschlagung eines mit unterschiedlichen Flächen gestalteten Kolbens 16 - Differenzkolben - des Linearmotors 13 über ein Taktventil 34 gesteuert, wobei ein zwischen Steuerkolben 35 und 36 der Steuerstange 37 des Taktventils 34 vorgesehener Ringraum 38 mit einer maschinenseitig ausmündenden Ablaufleitung 39 verbindbar ist.

Das Taktventil 34 steht in Verbindung mit einer vorzugsweise kennfeldgesteuerten Regeleinrichtung, mittels der die Nockenwelle 2 für jeden Betriebspunkt der Brennkraftmaschine gegenüber dem Antriebsrad 3 drehwinkelverstellt und der für den jeweiligen Betriebspunkt vorgegebene Verstellwinkel gehalten wird. Um für eine solche Regelung auch eine durch beengte Platzverhältnisse relativ kleinbauende Hydropumpe 18 verwenden zu können, kann am Maschinengehäusedeckel 14 ein Druck-Speicher 40 angeordnet sein, der über eine Verbindungs-Leitung 41 mit der dem Druck-Kanal 28 in der Zylinderwand zugeordneten Umfangsnut mediumsführend in Verbindung steht.

Zur Erleichterung der Montage der Vorrichtung 1 zur relativen Drehwinkelverstellung der Nockenwelle 2 zum Antriebsrad 3 kann die aus der Betätigungsanordnung 5 mit Linearmotor 13 und Hydropumpe 18 sowie dem Maschinengehäusedeckel 14 bestehende Bau- bzw. Montage-Einheit ferner das über die Kuppelstange 12 verbundene, zwischen der Nockenwelle 2 und dem Antriebsrad 3 winkelverstellwirksame Koppelglied 9 der Verstellanordnung 4 umfassen. Damit sind zusätzliche Montagemaßnahmen für die an der Brennkraftmaschine angeordnete Vorrichtung 1 vermieden.

Im Rahmen der Erfindung kann die Hydropumpe auch an der drehwinkelverstellbaren Welle angeordnet und das Pumpengehäuse der Hydropumpe über eine Steckanordnung deckelseitig drehfest gehalten sein. Weiter kann im Rahmen der Erfindung auch vorgesehen werden, den Linearmotor, die Hydropumpe - ggf. mit Geberrad - und eine das Taktventil mit Leitungen umfassende Steuereinrichtung in einem gesonderten, mit dem Maschinengehäusedeckel verbindbaren Teil angeordnet werden, wobei dieser gesonderte Teil als Nachrüstsatz dienen kann.

## Patentansprüche

1. Vorrichtung zur relativen Drehwinkelverstellung einer Welle zu einem Antriebsrad, insbesondere Nockenwelle einer Brennkraftmaschine,
- umfassend einen als Betätigungsanordnung (5) vorgesehenen hydraulischen Linearmotor (13), der
- auf eine zwischen Antriebsrad (3) und Welle (2) wirksame Verstellanordnung (4) einwirkt,
dadurch gekennzeichnet,
- daß eine Hydropumpe (18) mit einem Pumpenrotor (19) zur Längs- bzw. Verstell-Achse (17) des Linearmotors (13) koaxial angeordnet ist.

2. Vorrichtung nach Anspruch 1,
dadurch gekennzeichnet,
- daß Linearmotor (13) und Hydropumpe (18) zur drehwinkelverstellbaren Welle (2) koaxial an einem lösbar ausgebildeten Maschinengehäusedeckel (14) angeordnet sind, und
- mit diesem eine Bau- bzw. Montage-Einheit bilden.

3. Vorrichtung nach Anspruch 1 und 2,
dadurch gekennzeichnet, daß die Hydropumpe (18) eine Radialkolbenpumpe ist.

4. Vorrichtung nach den Ansprüchen 1 bis 3,
dadurch gekennzeichnet, daß der Linearmotor (13) als eine Zylinder/Kolben-Einheit (15,16) gestaltet ist.

5. Vorrichtung nach den Ansprüchen 1 bis 4,
dadurch gekennzeichnet,
- daß die Radialkolbenpumpe (18) am Maschinengehäusedeckel (14) wellenseitig angeordnet ist, wobei
- der Pumpenrotor (19) am Außenumfang des Zylinders (15) des Linearmotors (13) drehbeweglich gelagert ist.

6. Vorrichtung nach den Ansprüchen 1 bis 5,
dadurch gekennzeichnet,
- daß eine innenbeaufschlagte Radialkolberpumpe (18) vorgesehen ist mit einem im Maschinengehäusedeckel (14) ausgebildeten, wellenseitig offenen Pumpengehäuse (20), das
- den über eine Steckanordnung (21) in wellenseitiger Antriebsverbindung stehenden Pumpenrotor (19) aufnimmt.

7. Vorrichtung nach den Ansprüchen 1 bis 6,
dadurch gekennzeichnet,
- daß ein gesonderter, mit unterschiedlichen Außendurchmessern ausgebildeter Zylinder (15) des Linearmotors (13) in einer Stufenbohrung (22) des Maschinengehäusedeckels (14) angeordnet ist, und
- der Zylinder (15) wellenseitig mit einer Flanschbuchse (23) zur gleitbeweglichen Lagerung des radial verschiebbare Förderkolben (24) aufnehmenden Pumpenrotors (19) ausgerüstet ist, wobei
- die Flanschbuchse (23) über am Umfang verteilt angeordnete, saug- und druck-seitige Steueröffnungen aufweist zur Verbindung mit in der Zylinderwand angeordneten Zu- und Ablauf-Kammern (25,26).

8. Vorrichtung nach den Ansprüchen 1 bis 7,
dadurch gekennzeichnet,
- daß die Zuströmkammer (25) und die Abströmkammer (26) jeweils mit einem in der Zylinderwand angeordneten, im wesentlichen axial gerichteten Kanal (27,28) verbunden sind, und
- jeder Kanal (27,28) über eine am Außenumfang des Zylinders (15) des Linearmotors (13) ausgebildete Umfangsnut mit einer im Maschinengehäusedeckel (14) angeordneten Leitung (29,30) in Verbindung steht.

9. Vorrichtung nach den Ansprüchen 1 bis 8,
dadurch gekennzeichnet,
- daß dem Zylinder (15) des Linearmotors (13) am wellenseitigen Ende eine den Saug-Kanal (27) und den Druck-Kanal (28) abschließende Flanschmutter (31) zugeordnet ist, die
- mit ihrem äußeren Randbereich der Axialsicherung der Flanschbuchse (23) auf dem Zylinder (15) dient.

10. Vorrichtung nach den Ansprüchen 1 bis 9,
dadurch gekennzeichnet, daß dem wellenseitig offenen Pumpengehäuse (20) mit axialem Spiel ein Geberrad (33) zugeordnet ist.

11. Vorrichtung nach den Ansprüchen 1 bis 10,
dadurch gekennzeichnet, daß das Geberrad (33) mit dem Pumpenrotor (19) einstückig ausgebildet ist.

12. Vorrichtung nach den Ansprüchen 1 bis 11,
dadurch gekennzeichnet, daß die Saug-Leitung (29) im Maschinengehäusedeckel (14) mit dem Schmierkreislauf der Maschine in Verbindung steht.

13. Vorrichtung nach den Ansprüchen 1 bis 12,
dadurch gekennzeichnet,
- daß im Maschinengehäusedeckel (14) vorgesehene Druck-Leitungen (30,30') zur beidseitigen Beaufschlagung eines mit unterschiedlichen Flächen gestalteten Kolbens (Differenzkolben 16) des Linearmotors (13) über ein Taktventil (34) gesteuert sind, wobei
- ein zwischen Steuerkolben (35,36) der Steuerstange (37) des Taktventils (34) vorgesehener Ringraum (38) mit einer maschinenseitig ausmündenden Ablaufleitung (39) verbindbar ist.

14. Vorrichtung nach den Ansprüchen 1 bis 13,
dadurch gekennzeichnet,
- daß am Maschinengehäusedeckel (14) ein DruckSpeicher (40) angeordnet ist, der
- über eine Verbindungs-Leitung (41) mit der dem Druck-Kanal (28) in der Zylinderwand zugeordneten Umfangsnut mediumsführend in Verbindung steht.

15. Vorrichtung nach den Ansprüchen 1 bis 14,
dadurch gekennzeichnet, daß die aus der Betätigungsanordnung (5) mit Linearmotor (13) und Hydropumpe (18) sowie dem Maschinengehäusedeckel (14) bestehende Bau- bzw. Montage-Einheit ferner ein über eine Kuppelstange (12) verbundenes, zwischen Welle (2) und Antriebsrad (3) winkelverstellwirksames Koppelglied (9) der Verstellanordnung (4) umfaßt.

16. Vorrichtung nach einem oder mehreren der Ansprüche 1 bis 15,
dadurch gekennzeichnet, daß die Hydropumpe an der drehwinkelverstellbaren Welle angeordnet und das Pumpengehäuse über eine Steckanordnung deckelseitig drehfest gehalten ist.

17. Vorrichtung nach einem oder mehreren der Ansprüche 1 bis 15,
dadurch gekennzeichnet, daß Linearmotor, Hydropumpe
- ggf. mit Geberrad - und Steuereinrichtung (Taktventil mit Leitungen) in einem gesonderten, mit dem Maschinengehäusedeckel verbindbaren Teil angeordnet sind.

## Claims

1. Apparatus for adjusting the relative angle of rotation of a shaft to a drive wheel, especially the camshaft of an internal combustion engine,
- comprising a hydraulic linear motor (13) as an actuating arrangement (5) which acts upon an adjuster (4) located between the drive wheel (3) and shaft (2)
characterised in that
- a hydraulic pump (18) with a pump rotor (19) is arranged coaxially to the longitudinal or adjustment axis (17) of the linear motor (13).

2. Apparatus according to Claim 1,
characterised in that
- the linear motor (13) and hydraulic pump (18) are arranged coaxially to the shaft (2) with an adjustable angle of rotation on a detachable engine housing cover (14) and
- form a structural or assembly unit with this.

3. Apparatus according to Claim 1 or 2,
characterised in that the hydraulic pump (18) is a radial piston pump.

4. Apparatus according to any of Claims 1 to 3,
characterised in that the linear motor (13) is in the form of a cylinder/piston unit (15, 16).

5. Apparatus according to any of Claims 1 to 4,
- characterised in that the radial piston pump (18) on the engine housing cover (14) is arranged on the shaft side
- while the pump rotor (19) is arranged on the circumference of the cylinder (15) of the linear motor (13) in a manner allowing rotational movement.

6. Apparatus according to any of Claims 1 to 5,
- characterised in that an internal-impingement radial piston pump (18) has a pump housing (20) which is open on the shaft side and is incorporated into the engine housing cover (14) and which
- accommodates the pump rotor (19) connected to the drive on the shaft side via a plug-in arrangement (21).

7. Apparatus according to any of Claims 1 to 6,
- characterised in that a separate cylinder (15) of the linear motor (13) of varying external diameter is arranged within a stepped bore (22) in the engine housing cover (14) and that the cylinder (15) is fitted with a flange bush (23) to enable sliding movement of the pump rotor (19) accommodating the radially-displaceable delivery piston (24), and
- the flange bush (23) is provided with ports distributed over the circumference on the suction and pressure sides to connect with the inlet and outlet chambers (25, 26) in the cylinder wall.

8. Apparatus according to any of Claims 1 to 7,
- characterised in that the inlet chamber (25) and the outlet chamber (26) are each connected to ducts (27, 28), which are substantially axially oriented, in the cylinder wall, and
- each duct (27, 28) is connected to a line (29, 30) arranged in the engine housing cover (14) via a peripheral groove on the circumference of the cylinder (15) of the linear motor (13).

9. Apparatus according to any of Claims 1 to 8,
- characterised in that
- a flange nut (31) which seals the suction duct (27) and pressure duct (28) is applied to the cylinder (15) of the linear motor (13) at the end on the shaft side and which
- serves to axially secure the flange bush (23) to the cylinder (15) through its external edge area.

10. Apparatus according to any of Claims 1 to 9,
characterised in that a master wheel (33) is provided on the open shaft-side of the pump housing (20) with axial play.

11. Apparatus according to any of Claims 1 to 10,
characterised in that the master wheel (33) and pump rotor (19) are integrated.

12. Apparatus according to any of Claims 1 to 11,
characterised in that the suction line (29) in the engine housing cover (14) is connected to the lubricant circuit of the engine.

13. Apparatus according to any of Claims 1 to 12,
characterised in that
- pressure lines (30, 30') which are provided in the engine housing cover (14) for impingement on both sides of a piston with different surfaces (differential piston 16) of the linear motor are controlled by a clock valve (34), and
- an annular space (38) provided between the control plungers (35, 36) of the control rod (37) of the clock valve (34) are connectable to a discharge line (39) opening on the engine side.

14. Apparatus according to any of Claims 1 to 13,
characterised in that
- a pressure reservoir (40) is arranged on the engine housing cover (14) which
- is connected in a medium-conveying manner to the peripheral groove leading to the pressure duct (28) in the cylinder wall via a connecting line (41).

15. Apparatus according to any of Claims 1 to 14,
characterised in that the structural or assembly unit comprising the actuating arrangement (5) with linear motor (13) and hydraulic pump (18), as well as the engine housing cover (14), further embraces a coupling member (9) which is effective in adjusting the angle between the shaft (2) and drive wheel (3) and which is connected via a coupling rod (12).

16. Apparatus according to one or more of Claims 1 to 15,
characterised in that the hydraulic pump is arranged on the shaft with an adjustable angle of rotation and the pump housing is secured on the cover with torsional rigidity through a plug-in arrangement.

17. Apparatus according to one or more of Claims 1 to 15,
characterised in that the linear motor, hydraulic pump-characterised in that the linear motor, hydraulic pumpwith or without a master wheel - and control device (clock valve with lines) are arranged as a separate part which may be connected to the engine housing cover.

## Revendications

1. Dispositif pour le réglage relatif de l'angle de rotation d'un arbre par rapport à une roue motrice, en particulier d'un arbre à cames d'un moteur à combustion interne,
- comprenant un moteur linéaire hydraulique (13) prévu comme dispositif d'actionnement (5), qui
- agit sur un dispositif de réglage (4) opérant entre une roue motrice (3) et l'arbre (2),
dispositif caractérisé en ce que :
- une pompe hydraulique (18) est disposée avec un rotor de pompe (19) coaxialement à l'axe longitudinal ou à l'axe de réglage (17) du moteur linéaire (13).

2. Dispositif selon la revendication 1, caractérisé en ce que :
- le moteur linéaire (13) et la pompe hydraulique (18) sont disposés coaxialement à l'arbre (2) dont on peut régler l'angle de rotation sur un couvercle de carter moteur (14) constitué de façon démontable et
- forment avec celui-ci une unité de construction ou de montage.

3. Dispositif selon la revendication 1 ou 2, caractérisé en ce que la pompe hydraulique (18) est une pompe à piston axial.

4. Dispositif selon les revendications 1 à 3, caractérisé en ce que le moteur linéaire (13) est constitué comme une unité cylindre/piston (15, 16).

5. Dispositif selon les revendications 1 à 4, caractérisé en ce que :
- la pompe à piston radial (18) est disposée sur le couvercle du carter moteur (14) du côté de l'arbre,
- le rotor de pompe (19) étant monté sur le pourtour extérieur du cylindre (15) du moteur linéaire (13) de façon mobile en rotation.

6. Dispositif selon les revendications 1 à 5, caractérisé en ce que :
- une pompe à piston axial (18) actionnée à l'intérieur est prévue avec un carter de pompe (20) constitué dans le couvercle de carter moteur (14), ouvert du côté de l'arbre, qui
- reçoit le rotor de pompe (19) se trouvant en liaison d'entraînement du côté de l'arbre au moyen d'un dispositif à enfichage (21).

7. Dispositif selon les revendications 1 à 6, caractérisé en ce que :
- un cylindre (15) distinct, constitué avec des diamètres extérieurs différents, du moteur linéaire (13) est disposé dans un alésage à gradins (22) du couvercle du carter moteur (14) et
- le cylindre (15) est équipé du côté de l'arbre d'une douille à bride (23) pour le montage glissant du rotor de pompe (19) recevant le piston de refoulement (24) pouvant coulisser radialement,
- la douille à bride (23) présentant des orifices de commande répartis sur le pourtour du côté de l'aspiration et du côté pression pour établir une liaison avec les chambres d'amenée et de départ (29, 26) disposées dans la paroi du cylindre.

8. Dispositif selon les revendications 1 à 7, caractérisé en ce que :
- la chambre d'arrivée (25) et la chambre de départ (26) sont reliées respectivement à un canal (27, 28) disposé dans la paroi du cylindre, orienté essentiellement dans le sens axial et,
- chaque canal (27, 28) est en liaison par une rainure annulaire constituée sur le pourtour extérieur du cylindre (15) du moteur linéaire (13) à une conduite (29, 30) disposée dans le couvercle (14) du carter moteur.

9. Dispositif selon les revendications 1 à 8, caractérisé en ce que :
- un écrou de bride (31) fermant à l'extrémité du côté de l'arbre le canal d'aspiration (27) et le canal de pression (28) est associé au cylindre (15) du moteur linéaire (13), écrou qui :
- par son bord extérieur sert à la fixation axiale de la douille à bride (23) sur le cylindre (15).

10. Dispositif selon les revendications 1 à 9, caractérisé en ce qu'une roue de détecteur (33) est associée au carter de pompe (20) ouvert du côté de l'arbre avec un jeu axial.

11. Dispositif selon les revendications 1 à 10, caractérisé en ce que la roue de détecteur (33) est constituée d'une seule pièce avec le rotor de pompe (19).

12. Dispositif selon les revendications 1 à 11, caractérisé en ce que la conduite d'aspiration (29) est en liaison dans le couvercle (14) du carter moteur avec le circuit de graissage du moteur.

13. Dispositif selon les revendications 1 à 12, caractérisé en ce que :
- des conduites sous pression (30, 30') prévues dans le couvercle de carter moteur (14) pour actionner des deux côtés un piston, formé avec des surfaces différents (piston différentiel 16), du moteur linéaire (13) sont commandées par une soupape rythmée (34),
- un espace annulaire prévu entre les pistons de commande (35, 36) de la tige de commande (37) de la soupape rythmée (34) peut être relié à une conduite de sortie (39) débouchant du côté du moteur.

14. Dispositif selon les revendications 1 à 13, caractérisé en ce que :
- sur le couvercle du carter moteur (14) est disposé un réservoir sous pression (40), qui
- est en liaison, par une conduite de liaison (41) avec la rainure périphérique, conduisant l'agent sous pression, associée au canal sous pression (28) dans la paroi du cylindre.

15. Dispositif selon les revendications 1 à 14, caractérisé en ce que l'unité de construction ou de montage consistant dans le dispositif d'actionnement (5) avec le moteur linéaire (13) et la pompe hydraulique (18) ainsi que le couvercle du carter moteur (14) comprend en outre un organe d'accouplement (9) du dispositif de réglage (4) opérant le réglage angulaire entre l'arbre (2) et la roue motrice (3), organe relié par une tige d'accouplement (12).

16. Dispositif selon une ou plusieurs des revendications 1 à 15, caractérisé en ce que la pompe hydraulique est disposée sur l'arbre dont on peut régler l'angle de rotation et le carter de pompe est maintenu sans pouvoir tourner par un dispositif à enfichage du côté du couvercle.

17. Dispositif selon une ou plusieurs des revendications 1 à 15, caractérisé en ce que le moteur linéaire, la pompe hydraulique - le cas échéant avec roue de détecteur - et le dispositif de commande (soupape rythmée avec conduites) sont disposés dans une partie distincte pouvant être reliée au couvercle du carter moteur.
